# EUROPEAN PATENT APPLICATION

(11) **EP 4 775 639 A1**
(43) Date of publication of application: **15.07.2026**
(21) Application number: 24862848.9
(22) Date of filing: 05.09.2024
(51) Int. Cl.: C09D 11/322, A23L 5/00

(54) **EDIBLE INK COMPOSITION CONTAINING MAGNESIUM OXIDE**

(30) Priority: 07.09.2023 WO PCT/JP2023/032692; 12.09.2023 EP 23196762; 22.04.2024 WO PCT/JP2024/015673; 09.07.2024 WO PCT/JP2024/024688
(71) Applicant: Capsugel Belgium NV, 2880 Bornem (BE)
(72) Inventor: TAKUBO Takahisa, Sagamihara-shi, Kanagawa 252-0253 (JP); SATO Kaori, Sagamihara-shi, Kanagawa 252-0253 (JP)
(74) Representative: De Clercq & Partners
(86) International application number: PCT/JP2024/031806
(87) International publication number: WO 2025/053196

(57) **Abstract**

An edible ink composition comprising magnesium oxide as a whitening agent, a binder, a solvent, and free from titanium oxide is produced. The edible ink composition of the present invention uses magnesium oxide instead of titanium oxide, as a whitening agent. Magnesium oxide has been safely used as a pharmaceutical agent and considered to have no health problems. Accordingly, it is useful for printing on the surface of solid foods, solid pharmaceutical preparations, in particular, capsules, tablets and caplet.

## Description

### (TECHNICAL FIELD)

The present invention relates to an edible ink composition. Especially, the present invention relates to an edible ink composition comprising magnesium oxide as a white pigment, the edible ink composition being free from titanium oxide. The present invention relates to the edible ink composition suitable for printing on the surface of solid food stuff or solid pharmaceutical formulations, such as confectionery, candies, tablets, caplets and capsules. Further, the present invention relates to solid food stuff and solid pharmaceuticals formulations (such as tablets, caplets and capsules) printed with the edible ink composition comprising magnesium oxide.

### (BACKGROUND TECHNOLOGY)

Solid food stuff such as confectionery or candies and solid pharmaceutical formulations such as tablets, caplets and capsules are usually printed with symbols, characters and/or patterns on their surfaces for identification of the products. In particular, printing on solid pharmaceutical formulations is widely used as a means of transmission for various information such as product names, code numbers, company names (such as their symbol marks), and the like.

Conventionally, printing of solid pharmaceutical formulations and solid food stuff is generally carried out using edible printing inks comprising pigments such as titanium oxide, iron sesquioxide, and edible aluminum lake mixed or dispersed in a vehicle wherein shellac is dissolved in an alcohol-based organic solvent (patent document 1 and patent document 2).

Shellac is a thermosetting resin that is produced by Laccifer lacca and is harmless to the human body. It is used as a binder for an edible ink in many countries because of its ability of adhesion to surfaces.

As water-insoluble white inorganic fine powders used in an edible ink composition for whitening the edible ink composition, water-insoluble calcium salts such as calcium carbonate and calcium phosphate, titanium oxide, magnesium carbonate and shell powder, that is ground calcium carbonate, are well known (patent document 3). The main component of shell powder is calcium carbonate."

Among these white pigments, titanium oxide has a high refractive index and high concealment power and coloring power. Therefore, it is widely used not only as a white pigment but also as a combination with colorants of other, non-white colors. However, in 2020, the European Union (EU) designated titanium oxide as "Carcinogenicity Classification 2", which prohibited the use of titanium oxide in the European food market from 2022. https://www.jetro.go.jp/biznews/2022/08/817e100825b5eb14.html

Furthermore, in the EU, it is said that the use of titanium oxide in pharmaceuticals will be banned by around 2025.
Therefore, there is an urgent need to develop an edible white ink composition free from titanium oxide for the food stuff and pharmaceutical fields.

An example of replacing titanium oxide with other material in the field of edible inks is described in Patent Document 4. The edible ink composition comprises an oil-based natural coloring material with a yellow color, characterized by 10-15% by weight of the above oil-based natural coloring material, 15-40% by weight of edible oil or fat as a vehicle and 50-70% by weight of eggshell calcium. The main component of the egg calcium is calcium carbonate.
However, white pigments with whiteness and concealment power comparable to titanium oxide and suitable for edible inks have not yet been reported.
There is an example in which magnesium oxide is added as a light-shielding agent to a coating agent for imparting light-shielding properties to the surface of a solid pharmaceutical formulation (Patent Document 5 and Patent Document 6). However, the coating agent is not an ink composition.
Furthermore, Patent Document 7 describes an edible ink containing 10 to 35 parts by weight of an edible coloring agent, 20 to 85 parts by weight of an edible connecting material, 0 to 1 part by weight of an edible adjuvant, and 0.5 to 5 parts by weight of an edible nanomaterial. The nanomaterials include nanoscale titanium oxide, nanoscale magnesium oxide, nanoscale calcium carbonate and the like. However, since nanomaterials (also called nanoparticles (particles with a diameter of 100 nm or less)) can be exposed to the human body through the respiratory tract, digestive tract, skin and mucous membranes, they may course problems from a safety perspective.

### (PRIOR ART DOCUMENTS)

### Patent Documents

Patent Document 1: JPS47-31706A
Patent Document 2: JP2020-29537A
Patent document 3: JPS63-63363A
Patent document 4: JPH8-308533A
Patent Document 5: JP2003-300872A
Patent Document 6: US2014/0251181A1
Patent Document 7: CN102942819A

### SUMMARY OF THE INVENTION

### (PROBLEMS TO BE SOLVED BY THE INVENTION)

The first purpose of the present invention is to provide an edible ink composition suitable for printing onto the surface of solid food stuff or solid pharmaceutical formulation, which does not have a carcinogenicity problem like titanium oxide. The second purpose of the present invention is to provide an edible ink composition with good adhesiveness to the surface of the print substrate and long-time stability. The third purpose of the present invention is to provide an edible ink composition that has good concealment power and coloring power.

### (SOLUTION TO PROBLEMS)

The inventors of the present invention have conducted repeated studies to find a new edible colorant that could be applied to white ink instead of titanium oxide, and have found that a printing ink comprising magnesium oxide can be used to print with clear identification.
Magnesium oxide is a chemical substance that has been conventionally used in pharmaceuticals as an antacid and laxative, and is also used as a food additive. Therefore, it can be safely used as a white pigment for the edible ink composition. Further, the edible ink composition comprising magnesium oxide meets the required stability and properties, and thus it can be used for printing on solid pharmaceutical formulations and solid food stuff.

The edible ink composition of the present invention comprises a binder and a solvent in addition to magnesium oxide. Furthermore, said edible ink composition can comprise plasticizers, wetting agents and other additives in a conventional manner and it can sufficiently achieve its purpose as a printing ink in the presence of these additives.

The present invention has been completed based on the above findings, and includes the following aspects.
[1] An edible ink composition comprising magnesium oxide, a binder and a solvent, wherein said magnesium oxide is produced at the calcining temperature of at least 700 °C, and the edible ink composition is free from titanium oxide.
[2] The edible ink composition according to claim 1, wherein said magnesium oxide is produced at the calcining temperature of at least 800 °C.
[3] The edible ink composition according to [1] or [2], wherein magnesium oxide has a D90 value of 20 µm or less,
[4] The edible ink composition according to any one of claims [1] to [3], wherein magnesium oxide has a particle size distribution with a D90 value of from 1 to 15 µm.
[5] The edible ink composition according to any one of [1] to [4], wherein magnesium oxide has a particle size distribution with a D10 value of 0.1 µm or more.
[6] The edible ink composition according to any one of claims [1] to [5], wherein the amount of magnesium oxide in the ink after drying of the edible ink composition is 99 wt% or less, preferably from 60 to 99 wt%, the wt% being based on the weight of the ink after drying of the edible ink composition.
[7] The edible ink composition according to any one of [1] to [6], wherein the solid contents of the edible ink composition is 65 wt% or less, preferably from 20 to 65 wt%, of the weight of the edible ink composition.
[8] The edible ink composition according to anyone of [1] to [7], wherein the solvent basically volatilizes or evaporates and does not remain in the ink after the edible ink composition has dried.
[9] The edible ink composition according to anyone of claims [1] to [8], wherein the solvent is an alcohol or a mixture of alcohol with water, preferably the alcohol is ethanol, propanol or butanol, more preferably ethanol or butanol; even more preferably the alcohol is ethanol.
[10] The edible ink composition according to anyone of [1] to [9], wherein the binder is preferably an edible film-forming and non-thermosetting polymer or shellac and when the binder is a non-thermosetting polymer, the binder is soluble in alcohol, more preferably, the binder is hydroxypropyl cellulose, polyvinylpyrrolidone or mixtures thereof.
[11] The edible ink composition according to any one of [1] to [10], comprising a moisture-proof coating agent.
[12] The edible ink composition according to [11], wherein the moisture-proof coating agent is a higher fatty acid ester, a C₁₆ or higher alcohol, a C₁₂ or higher fatty acid, a glyceride, or a mixture thereof that is soluble or miscible in alcohol but insoluble in water, or a surfactant with an HLB value of 6 or less.
[13] The edible ink composition according to [11] or [12],
   wherein the moisture-proof coating agent is stearic acid, beeswax, such as white beeswax, resin, such as rosin, wood wax, spermaceti, lanolin, lanolin alcohol, cetanol, stearyl alcohol, cetanol monostearate polyethylene glycol mixed wax, cetanol polysorbate 60 mixed wax, cetostearyl alcohol, isopropyl myristate, isopropyl linoleate, isopropyl palmitate, vegetable oil such as oleic acid, olive oil, castor oil, and other.
[14] The edible ink composition according to any one of [11] to [13], wherein the amount of the moisture-proof coating agent is 0.1 to 20 %, preferably 0.1 to 10 %, based on the combined weight of the magnesium oxide and the binder.
[15] The edible ink composition according to any one of [1] to [14], comprising a further colorant having a color other than white.
[16] The edible ink composition according to anyone of [1] to [15], comprising one or more additives commonly used in printing inks such as drying speed modifier, plasticizers, wetting agents, adhesion enhancers, ink glossing agents, a thixotropy imparting agent and fragrance;
   possible additives comprise glycerin, triethyl citrate (TEC), triacetin, ethylene glycol, propylene glycol, resins, waxes, polyglycerin fatty acid ester, glycerin fatty acid ester, sucrose fatty acid ester, sorbitan fatty acid ester, lecithin, enzymatically degraded lecithin, polysorbate, silicon dioxide (SiO2), a starch, an alcohol-insoluble cellulose flavors and/or a combination thereof.
[17] A print substrate printed with the edible ink composition according to any one of [1] to [16]; preferably the print substrate is a solid food stuff or a solid pharmaceutical formulation, solid pharmaceutical formulation is preferably a hard capsule, a soft capsule, a tablet or a caplet.
[18] A method for producing an edible ink composition, the method comprising the step of mixing the components of the edible ink composition which are magnesium oxide, binder, solvent and any optional component such as an additive to provide the edible ink composition; with the edible ink composition and its components according to any one of [1] to [16].
[19] A method of printing the edible ink composition on a print substrate, with the edible ink composition according to any one of [1] to [16] and the print substrate.

The components of the edible ink composition of the present invention are described in more detail below.

### (Magnesium oxide, MgO)

In the present invention, heavy magnesium oxide is used as a white pigment for the edible ink composition. Heavy magnesium oxide is industrially produced by thermally decomposing magnesium carbonate or magnesium hydroxide.

Magnesium oxide sintered at a calcining temperature of 600 °C to 900 °C during production is called "Caustic calcined magnesite" or "Caustic calcined magnesia" or "light-burned magnesia", and has higher chemical reaction activity than so called hard-burned magnesia, which is produced at calcining temperature of from 1'000 to 1'500 °C.

Initially, the inventors of the present invention tried to develop the edible ink composition using magnesium oxide produced with a calcining temperature of 600 °C. But it was found that when it was dispersed in a solvent together with a binder, the viscosity of the edible ink composition increases over time and eventually hardens and becomes no longer usable.

It is speculated that when caustic calcined magnesite (calcining temperature of 600 °C) was used, it reacted with even a small amount of moisture and changed to magnesium hydroxide over time, causing the particles to adhere and form lumps. However, as a result of increasing the calcining temperature to magnesium oxide above 600 °C, this phenomenon was surprisingly suppressed, and it was found that an ink excellent in over-time stability could be produced.

Magnesium oxide used in the present invention is produced at calcining temperature of at least 700 °C, preferably at least 800 °C, more preferably at least 900 °C, even more preferably at least 925 °C. Particular embodiments of calcining temperature are 950 °C and 1'300 °C.

Preferably, the magnesium oxide content of the edible ink composition is 65 wt% or less, preferably from 20 to 65 wt%, more preferably from 20 to 50 wt%, of the weight of the edible ink composition.

Preferably, the edible ink composition does not contain nanoparticles.

Preferably, the ink after drying of the edible ink composition does not contain nanoparticles.

More preferably, the edible ink composition does not contain nanoparticles and the ink after drying of the edible ink composition does not contain nanoparticles.

Magnesium oxide used in the present invention has a particle size that is suitable for ink application.

The particle size distribution of magnesium oxide can be characterized by D10 and/or D90 values. The D10/D90 value indicates that 10%/90% of the particles have a particle size smaller than the D10/D90 value. Within the meaning of the invention, said % unit of any D10/D90 value means cumulative volume %.

In one embodiment, the magnesium oxide has a particle size distribution with a D10 value of 2 µm or less, preferably 1.5 µm or less, more preferably of 1.0 um or less.

The magnesium oxide has a particle size distribution with a D90 value of 20 µm or less, preferably 15 µm or less, more preferably 10 µm or less, even more preferably 5 µm or less, especially 2 µm or less, more especially 1.5 µm or less, even more especially 0.8 µm or less.

Magnesium oxide used in the present invention can have a maximum particle size of 20 µm or less.

The maximum particle size of magnesium oxide preferably is 15 µm or less, more preferably 10 µm or less, even more preferably 5 µm or less, especially 2 µm or less, more especially 1.5 µm or less, even more especially 0.8 µm or less.

The larger the size of the magnesium particles is the more difficult it is to keep the particles suspended without precipitation. Precipitated magnesium particles tend to roughen the surface of the printed print, tend to cause variations in the print quality, tend to impair the print quality. For example, if the D90 value of the particle size distribution exceeds 20 µm magnesium oxide tends to precipitate in the edible ink composition.

From the point of view of product value, it is preferable to exclude nanoparticles due to health considerations.

Therefore, in one embodiment,
magnesium oxide has a particle size distribution with a D10 value of 0.1 µm or more or even has a minimum particle size of 0.1 µm or more;
so, preferably, the magnesium oxide has a particle size distribution with a D10 value of from 0.1 to 2 µm, more preferably of from 0.1 to 1.5 µm, even more preferably of from 0.1 to 1.0 um;
especially the magnesium oxide has a particle size distribution with a D10 value of 2 µm or less and with a minimum particle size of 0.1 µm;
more especially with a D10 value of 1.5 µm or less and with a minimum particle size of 0.1 µm,
even more especially with a D10 value of 1 µm or less and with a minimum particle size of 0.1 µm.

In another embodiment,
magnesium oxide has a particle size distribution with a D10 value larger than 0.1 µm or even has a minimum particle size larger than 0.1 µm;
so, preferably, the magnesium oxide has a particle size distribution with a D10 value of from larger than 0.1 µm to 2 µm, preferably of from larger than 0.1 µm to 1.5 µm, more preferably of from larger than 0.1 to 1 um;
even more preferably the magnesium oxide has a particle size distribution with a D10 value of 2 µm or less and with a minimum particle size of larger than 0.1 µm; especially with a D10 value of 1.5 µm or less and with a minimum particle size of larger than 0.1 µm,
more especially with a D10 value of 1 µm or less and with a minimum particle size of larger than 0.1 µm.

Any values of particle size and particle size distribution of the magnesium oxide stated herein have been and can be measured and determined by laser diffraction with 650 nm detecting wavelength and 405 nm emitting wavelength. Preferably the measurement was done and can be done with an aqueous dispersion of the magnesium oxide. Preferably the measurement was done and can be done at room temperature. The term "room temperature" as used herein means 24 °C.

A measurement of a particle size distribution was done and can be done as follows: Preparation of the aqueous dispersion of magnesium oxide:
A sample for the measurement was prepared by putting an appropriate amount of magnesium oxide in an aqueous solution of sodium hexametaphosphate (0.2 wt%) (Wako Pure Chemical Industries, Ltd.), dispersing it in an external ultrasonic bath. Then, the dispersion was put into a particle size distribution analyzer and the particle size distribution was measured while an ultrasonic treatment of the sample occurred which was applied by a respective ultrasonic device built-in in the particle size distribution analyzer.

Measuring device: Laser diffraction/scattering particle size distribution analyzer partica LA-960V2 (Horiba Ltd.)
Measuring unit: Wet type
Measurement temperature: room temperature
Light source: LD ((laser diode, 650 nm) and LED (light emitting diode, 405 nm)
Particle size criteria: Volume
Particle refractive index: 1.76 (real part), 0.00 (imaginary part)
Solvent: 0.2 wt% sodium hexametaphosphate aqueous solution
Solvent refractive index: 1.333

### (Binder)

Preferably, the binder is is an edible film-forming and non-thermosetting polymer and the binder is soluble in alcohol, even more preferably, the binder is hydroxypropyl cellulose (HPC), polyvinylpyrrolidone (PVP) or mixtures thereof.

Hydroxypropyl cellulose is a non-ionic cellulose ether obtained from cellulose (pulp) widely found in nature, treated with sodium hydroxide and then reacted with etherifying agents such as propylene oxide.

Hydroxypropyl cellulose is used as pharmaceutical additives for tablets, caplets and granules, such as lubricants, coating agents, disintegrants and binders. Polyvinylpyrrolidone is also used in Japan in the pharmaceutical field and used in the European Union (EU) as a coating agent for pharmaceutical tablets. Accordingly, no safety issues arise when these are used as binders for the edible ink composition.

Alternatively, shellac, an alcohol-soluble edible ink binder, can be used.

### (Solvent)

Preferably, the solvent essentially volatilizes or evaporates and does not remain in the ink after the edible ink composition has dried

Preferably, the solvent is an alcohol or a mixture of alcohol with water, more preferably the alcohol is ethanol, propanol or butanol, preferably ethanol or butanol. Even more preferably the alcohol is ethanol. Mixtures of alcohol with water have an alcohol content of preferably at least 80 vol%, more preferably at least 85 vol%, even more preferably at least 90 vol%. Embodiments are for example alcohol water mixtures with 99 vol% or 95 vol% of alcohol, such as 99 vol% or 95 vol% aqueous ethanol.

During the printing process itself, the edible ink composition may be further diluted with a required amount of alcohol or water.

Highly polar solvents such as glycerin, ethylene glycol and propylene glycol are also compatible with alcohols and can be mixed in suitable quantities. The higher the carbon number, the lower the vapor pressure of the alcohol, so mixing the right amount can slow down the drying rate of the edible ink composition.

If the edible ink composition dries too quickly, glycerin, ethylene glycol or propylene glycol , urea, or any type of sugar soluble in the solvent, such as sorbitol or fructose can be added to the composition in appropriate amounts. These means allow for the ink density and drying speed to be adjusted according to the temperature and humidity of the printing room.

### (Other additives).

The edible ink composition can comprise a further colorant which has a color other than white.

The magnesium oxide has two effects, it has a white color and it opacifies, so the magnesium oxide acts both as white colorant and as opacifier, and any of the effects or both can be desired. So the ink after drying of the edible ink composition, when it contains only magnesium oxide as colorant, is opaque and has a white color. When a color other than white is desired then still any of the two effects or both of the magnesium oxide can be desired: its white color can brighten (also called lighten up or brighten up) the desired non-white color of the further non-white colorant, so it acts as a whitening agent as well as a lightening or brightening agent, and its opacity can contribute to any opacity of the further non-white colorant, it can even be the only source of opacity if the further non-white colorant itself does not introduce any opacity.

Preferably, any colorant comprised in the edible ink composition has a color other than white.

In an embodiment, the edible ink composition is free from the white-color colorant; titanium oxide (TiO₂).

In an embodiment, the edible ink composition is free from TiO₂.

In an embodiment, the edible ink composition is free from the white-color colorant; calcium carbonate (CaCO₃).

In an embodiment, the edible ink composition is free from CaCO₃.

In an embodiment, the edible ink composition is free from the white-color colorant; TiO₂ and is free from the white-color colorant; CaCO₃.

In an embodiment, the edible ink composition is free from TiO₂ and is free from CaCO₃.

In an embodiment, the edible ink composition is free from a colorant with a white color (also called a white-color colorant) other than magnesium oxide.

If a colored ink with a color other than white is desired, appropriate amounts of colorants such as iron sesquioxide or aluminium lake or other food coloring agents, be it pigments or dyes, or natural and tar dyes soluble in the solvent, may be added to the edible ink composition or may replace a part of the magnesium oxide.

Other coloring agents used in the pharmaceutical or food industry may be used. Such coloring agents include, for example, laked tar dyes, water-soluble tar and natural dyes, caramel, cochineal dyes, lac dyes, riboflavin, sodium iron chlorophyllin, sodium copper chlorophyllin, copper chlorophyll, carbon powder, black iron oxide, squid ink pigment, etc.

For pearlescent effects, pearl pigments made from appropriate amounts of fish scale foil, shellfish nacre or fine powders such as mica, silicon dioxide, etc. are used.

The above edible ink composition comprising magnesium oxide can comprise one or more additives commonly used in printing inks such as moisture-proof coating agents, drying speed modifier, plasticizers, wetting agents, adhesion enhancers, ink glossing agents, a thixotropy imparting agent and fragrance. Preferably, any additives are edible additives.

Even in the presence of these additives, the present edible ink composition can sufficiently fulfil its purpose as a printing ink.

For example, resins such as resins such as rosin soluble in the solvent, waxes, polyglycerol fatty acid esters, glycerol fatty acid esters, sucrose fatty acid esters, sorbitan fatty acid esters, lecithin, enzymatically degraded lecithin or polysorbates that are soluble in the solvent may be added, for example, for the purpose of moisture-proof coating, strengthening adhesive strength, glossing ink or adjusting ink hardness.

In particular, the addition of a moisture-proof coating agent improves ink adhesion and increases reflectance and whiteness.

Moisture-proof coating agents that can be added in the ink are a fatty acid ester soluble or miscible in alcohols and insoluble in water, a C₁₆ or higher alcohol, a C₁₂ or higher fatty acid, a glyceride, or a mixture thereof, or a surfactant with an HLB of 6 or less.

Specific examples for a moisture proof coating agent include stearic acid, beeswax, such as white beeswax, resin, such as rosin, wood wax, spermaceti, lanolin, lanolin alcohol, cetanol, stearyl alcohol, cetanol monostearate polyethylene glycol mixed wax, cetanol polysorbate 60 mixed wax, cetostearyl alcohol, isopropyl myristate, isopropyl linoleate, isopropyl palmitate, oleic acid, and vegetable oils such as olive oil and castor oil.

Stearic acid and beeswax are particularly preferable examples for moisture- proof coating agents.

The amount of the moisture-proof coating agent is 0.1 to 20 % by weight, preferably 0.1 to 10% by weight, based on the combined weight of magnesium oxide and the binder (HPC or PVP, etc.).

Plasticizers soluble in the solvent, such as glycerine, triethyl citrate (TEC) and triacetin, may also be added to alleviate ink hardness.

So possible additives comprise glycerin, triethyl citrate (TEC), triacetin, ethylene glycol, propylene glycol, resins, waxes, polyglycerin fatty acid ester, glycerin fatty acid ester, sucrose fatty acid ester, sorbitan fatty acid ester, lecithin, enzymatically degraded lecithin, polysorbate, silicon dioxide (SiO2), a starch, an alcohol-insoluble cellulose, flavors and/or a combination thereof.

In order to improve the adhesion of the ink, any type of polymeric thickener, thickening stabilizer, or adhesive that is soluble in the solvent may be added, such as zein, rosin, or glycerol esters of wood rosin.

### (Weight ratio of the components)

A typical amount of solvent in the edible ink composition is from 35 to 80 wt%, more preferably from 40 to 75.5 wt%, the wt% being based on the weight of the edible ink composition.

A typical amount of binder in the edible ink composition is from 0.5 to 25 wt%, more preferably from 0.5 to 22.5 wt%, even more preferably from 0.5 to 20 wt%, the wt% being based on the weight of the edible ink composition.

A typical amount of magnesium oxide in the edible ink composition is from 10 to 60 wt%, more preferably from 15 to 55 wt%, even more preferably from 20 to 50 wt%, the wt% being based on the weight of the edible ink composition.

A typical range for the weight ratio magnesium oxide /binder in the edible ink composition is from 1.9 to 105.

Preferably, the amount of magnesium oxide in the ink after drying of the edible ink composition is 99 wt% or less, preferably from 60 to 99 wt%, the wt% being based on the weight of the ink after drying of the edible ink composition.

Preferably, the solid contents of the edible ink composition, that is the weight of the ink after drying of the edible ink composition, is 65 wt% or less, more preferably from 20 to 65 wt%, of the weight of the edible ink composition.

A typical amount of an additive, especially of a plasticizer, in the edible ink composition is from 0 to 5 wt%, the wt % being based on the weight of the edible ink composition.

Preferably, the range of the amounts of binder, solvent, magnesium oxide and possible plasticizer in the edible ink composition are as follows;
Binder: 0.5 to 20 wt%
MgO: 20 to 50 wt%
Solvent: 40 to 75.5 wt%
Plasticizer: 0 to 5 wt%
with the wt% being based on the weight of the edible ink composition.

### (Method for producing the edible ink composition)

A further subject of the invention is a method for producing an edible ink composition, the method comprising the step of mixing the components of the edible ink composition which are magnesium oxide, binder, solvent and any optional component such as an additive to provide the edible ink composition; with the edible ink composition and its components as defined herein, also with all their embodiments.

The mixing of the components can be done in any order.

Depending on the properties of the magnesium oxide the method may comprise a step of dispersing the magnesium oxide in the solvent.

In one embodiment the method for producing the edible ink composition comprises the steps of
(i) mixing magnesium oxide and binder,
(ii) adding a solvent to the mixture provided by (i), and
(iii) dispersing the magnesium oxide in the solvent.

### (Printing method)

A further subject of the invention is a method of printing the edible ink composition on a print substrate, with the edible ink composition and the print substrate as defined herein, also with all their embodiments.

There are no restrictions on the method of printing the edible ink composition onto a print substrate, such as solid pharmaceutical formulations and solid food stuff using the edible ink composition comprising magnesium oxide, which can be carried out according to known conventional methods.

For example, printing on a capsule can be done by diluting the printing ink stock solution with the solvent mentioned above as required and using a gravure/offset printing machine.

### (Object of printing)

Print substrate can be solid food stuff or solid pharmaceutical formulations such as hard capsules, soft capsules, tablets and caplets.

In case of a hard capsule, the capsule base material may be any known material that can be used in pharmaceuticals and health foods, such as gelatin, pullulan, hydroxypropyl methylcellulose (HPMC), hypromellose acetate succinate ester (HPMCAS), hydroxypropyl methylcellulose phthalate (HPMCP), ethyl acrylate methyl methacrylate copolymer, polyvinyl alcohol (PVA), starch-based, also combinations of these capsule base materials, etc. HPMC capsules, gelatine capsules and pullulan capsules are preferable.

The capsules may be banded or sealed. The capsules may also be colored with known colorants, preferably natural dyes.

Solid food stuff such as confectionery and candy can be a print substrate for the edible ink composition or present invention, too.

### (EFFECT OF THE INVENTION)

By printing onto said print substrates, such as tablets, caplets and capsules, using the edible ink composition comprising magnesium oxide described above, clear white prints can be obtained. Also colored printings can be obtained when dyestuff with a color other than white is added to the edible ink composition. These printings also have the same peel resistance and other properties as those obtained with conventional printing inks.

The imprints made with the edible ink compositions comprising magnesium oxide on the print substrate and the print substrates, such as capsules, printed with the edible ink composition comprising magnesium oxide are stable over time and under light. The printed capsules also conform to the properties, quality and characteristics of capsules as defined in the Japanese Pharmacopoeia, namely appearance, properties and purity tests, and can be used for pharmaceutical or food purposes in exactly the same way as conventional capsules.

### [DEFINITIONS]

For propane-1,2,3-triol, all three common names glycerol, glycerine and glycerin, are used synonymously herein.

The term edible ink composition means herein the liquid composition comprising magnesium oxide, binder and solvent; after drying, that is after evaporation of the volatile components of the edible ink composition, the remaining solid is usually called ink herein.

The unit «um» means the same as the unit «µm», that is «micrometer», if not otherwise stated.

The present invention is be described in detail based on the following examples. Needless to say, these examples do not limit the present invention.

### [EXAMPLES]

### 1. Magnesium oxide

The manufacturing conditions and particle size distribution of magnesium oxide products (MS-0, MS-1 and MS-2F) used in the following examples are described in Table 1.
MS-0; Magnesium oxide (heavy) (food additive) Tomita Pharmaceutical Co., Ltd.
MS-1; Magnesium oxide (heavy) (food additive) Japan Natural Energy & Resources Co., Ltd.
MS-2F; Fine-grained Magnesium oxide (heavy) (food additive) Japan Natural Energy & Resources Co., Ltd.

**Table 1**

| Magnesium oxide product | MS-0 | MS-1 | MS-2F |
|---|---|---|---|
| calcining temperature | 600 °C | 950 °C | 1300 °C |
| Particle size distribution : D10 | 1.8 um | 0.9 um | 0.2 um |
| Particle size distribution : D50(*) | 3.2 um | 1.7 um | 0.5 um |
| Particle size distribution : D90 | 5.1 um | 4.2 um | 1.0 um |
| Particle size distribution : D100(*) | 9.3 um | 17.8 um | 3.0 um |

| | | | |
|---|---|---|---|
| (*) The D50/D100 values are defined in analogy to the definition given herein for the D10/D90 value. | | | |

### 2 . Preparation of the edible ink compositions

The edible ink compositions (samples 1 to 15) were prepared as follows:
1) Magnesium oxide powder and HPC powder (Sample-1 to Sample -13 and Sample -15) or PVP powder (Sample-14) were mixed in the weight ratios shown in Table 2 and then put in a 100 ml homogenizer container.
2) 95 vol% aq. ethanol with the amount shown in the table is added to the mixture of 1) (at room temperature).
3) The mixture of 2) is mixed well with a glass rod.
4) The magnesium oxide powder is dispersed with a homogenizer (ACE HOMOGENIZER, AM-8) at 6000 to 8000 rpm for 5 minutes.
5) the dispersing of 4) is repeated twice.
6) The prepared edible ink composition is put into a sealable container and stored at room temperature so that the solvent does not evaporate.

Irrespective whether HPC or PVP was used as the binder, white edible ink could be similarly prepared.

**Table 2**

| | Sample NO. of Edible ink composition | | | | | | | | | | | | | | |
|---|---|---|---|---|---|---|---|---|---|---|---|---|---|---|---|
| components | 1 | 2 | 3 | 4 | 5 | 6 | 7 | 8 | 9 | 10 | 11 | 12 | 13 | 14 | 15 |
| MgO (MS-0) | 40 | | | | | | | | | | | | | | |
| MgO (MS-1) | | 40 | 20 | | | | | | | | | | | | |
| MgO (MS-2F) | | | | 40 | 40 | 37. 6 | 34. 2 | 31. 1 | 28. 3 | 40. 0 | 40. 0 | 40. 0 | 50.0 | 40. 0 | 40. 0 |
| HPC | 9 | 9 | 4.5 | 20 | 9 | 8.6 | 7.8 | 7.1 | 6.4 | 4.6 | 3.0 | 1.0 | 0.5 | | 4.0 |
| PVP | | | | | | | | | | | | | | 4.6 | |
| 95% EtOH | 51 | 51 | 75. 5 | 40 | 51 | 53. 8 | 58. 0 | 61. 8 | 65. 3 | 55. 4 | 57. 0 | 59. 0 | 49.5 | 55. 4 | 56. 0 |
| Total weight | 100 | 100 | 100 | 100 | 100 | 100 | 100 | 100 | 100 | 100 | 100 | 100 | 100 | 100 | 100 |
| MgO binder (wt/wt) | 4.4 | 4.4 | 4.4 | 2.0 | 4.4 | 4.4 | 4.4 | 4.4 | 4.4 | 8.7 | 13. 3 | 40. 0 | 100. 0 | 8.7 | 10. 0 |
| MgO/Solid content* (wt/wt) | 81. 6 | 81. 6 | 81. 6 | 66. 7 | 81. 6 | 81. 4 | 81. 4 | 81. 4 | 81. 6 | 89. 7 | 93. 0 | 97. 6 | 99.0 | 89. 7 | 90. 9 |
| Solid content*/ edible ink composition (wt/wt) | 49. 0 | 49. 0 | 24. 5 | 60. 0 | 49. 0 | 46. 2 | 42. 0 | 38. 2 | 34. 7 | 44. 6 | 43. 0 | 41. 0 | 50.5 | 44. 6 | 44. 0 |

| | | | | | | | | | | | | | | | |
|---|---|---|---|---|---|---|---|---|---|---|---|---|---|---|---|
| * "Solid content" refers to the weight of the ink after drying of the edible ink composition. | | | | | | | | | | | | | | | |

The following products were used as binders.
HPC (Nippon Soda, product name: Cerny SSL)
PVP (polyvinylpyrrolidone, BASF, product name: Kolidon 90F)

### 3. Test for long-time stability

Method for testing long-time stability of the edible ink composition was as follows: After putting the prepared edible ink solution into a polypropylene container and covering, the container was stored at room temperature. The condition of the ink solution was observed after 2 weeks.

As a comparative product, an off-the-shelf white ink was used; C.F.White (San-Ei Gen F.F.I., Inc) wherein TiO₂ is used as a white pigment.

The edible ink composition (Sample-1) comprising magnesium oxide (MS-0) produced at a calcining temperature of 600 °C solidified 5 days after it was prepared, making it unusable. However, no abnormalities, in particular no solidification, were observed in the comparative product and the other samples (samples 2 to 15).

**Table 3**

| | comparative product | Sample 1 | Samples 2 to 15 |
|---|---|---|---|
| over-time stability of ink | No abnormality | Viscosity increased over time. The entire ink solidifies on the 5th day after the ink preparation | No abnormality |

### 4. Ink adhesion test

Peeling strength of ink was measured as follows:
Two stripes of a tape with a thickness of about 50 µm were pasted parallel to each other onto a gelatin sheet with a gap between the two stripes of about 1 cm, so these two stripes of tape with a thickness of 50 µm works as "spacer" in order to make thickness of ink 50 um. Then, ink solution was dropped onto the gelatin sheet showing in the gap between the two stripes of tape, and the ink was quickly bar-coated using a round glass bar sliding on the surface of the two stripes of tape while crossing the gap between the two stripes of tape.

With this method, an ink having a thickness of about 50 µm was bar-coated on the gelatin sheet.

At 10, 30, 60, 120, 180, 240, and 600 seconds after the bar coating, a Nichiban cellophane tape was stuck onto the bar coated parts and then removed immediately.

Peeling strength of ink was evaluated as follows.
○ : The coated ink remained on the surface of the gelatin sheet
× : The coated ink peeled off the surface of the gelatin sheet
○ is pass, and × is failure.

The result is described in Table 4.

All the inks of samples 2 to 15 provided the same or better adhesion and drying speed compared to the comparative product.

**Table 4**

| | | Sample NO. of edible ink composition | | | | | | | | | | | | | |
|---|---|---|---|---|---|---|---|---|---|---|---|---|---|---|---|
| Time after print (sec) | C.F. White (San-Eigen) | 2 | 3 | 4 | 5 | 6 | 7 | 8 | 9 | 10 | 11 | 12 | 13 | 14 | 15 |
| 10 | × | × | × | × | × | × | × | × | × | × | × | × | × | × | × |
| 30 | × | × | × | × | × | × | × | × | × | × | × | × | × | × | × |
| 60 | × | × | × | × | × | × | × | ○ | ○ | × | × | ○ | ○ | × | × |
| 120 | × | × | ○ | × | ○ | × | ○ | ○ | ○ | ○ | ○ | ○ | ○ | × | ○ |
| 180 | × | ○ | ○ | × | ○ | ○ | ○ | ○ | ○ | ○ | ○ | ○ | ○ | ○ | ○ |
| 240 | ○ | ○ | ○ | ○ | ○ | ○ | ○ | ○ | ○ | ○ | ○ | ○ | ○ | ○ | ○ |
| 600 | ○ | ○ | ○ | ○ | ○ | ○ | ○ | ○ | ○ | ○ | ○ | ○ | ○ | ○ | ○ |

### 5. Ink color analysis

Color difference is measured as follows:
Ink samples and a white ink made of TiO₂, C.F. White (San-Ei Gen F.F.I., Inc.), as a comparative product, were bar coated as described in the above "4. Ink adhesion test".
After drying of the ink samples, L value was measured with X-Rite's color meter, model Ci7600, and the color difference ( 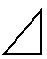 L) was calculated while comparing with the comparative product.

**Table 5**

| | Comparative product | Sample NO. of edible ink composition | | | | | | | | | | |
|---|---|---|---|---|---|---|---|---|---|---|---|---|
| | C.F. White (San-Eigen F.F.I., Inc) | 5 | 6 | 7 | 8 | 9 | 10 | 11 | 12 | 13 | 14 | 15 |
| L | 92.89 | 87.2 | 86.6 | 82.2 | 79.4 | 79.1 | 90.0 | 90.5 | 90.7 | 92.6 | 90.0 | 91.4 |
| ΔL | 0 | 5.7 | 6.3 | 10.7 | 13.5 | 13.8 | 2.9 | 2.4 | 2.2 | 0.3 | 2.9 | 1.5 |

The L value indicates the components of brightness and whiteness, and the higher the L value, the stronger the whiteness.

C. F. White's binder uses shellac. Since it has pale yellow color, the ink is also slightly yellowish white. On the other hand, the white inks of Samples 5 to 15 of the present invention are pure white. For this reason, it is possible to compare the whiteness with 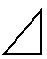 L.

### 6. Adjusting the drying speed

If the solvent is only water-containing ethanol, the ink on the printer can evaporate rather fast, and depending on the printing machine used the edible ink composition may dry before it is transferred to the print substrate, which may result in lower print quality. In such cases, glycerin or both water and glycerin can be added to the edible ink composition to slow down drying speed.

Table 6 shows examples of samples (Samples 16 to 20) whose drying speed was adjusted with glycerin or both water and glycerin.

**Table 6**

| components | Sample NO. of edible Ink composition | | | | |
|---|---|---|---|---|---|
| | 16 | 17 | 18 | 19 | 20 |
| MS-2F (wt%) | 38.0 | 38.0 | 38,.0 | 38.0 | 22.8 |
| HPC (wt%) | 8.6 | 8.6 | 8.6 | 8.6 | 5.1 |
| 95% ethanol (wt%) | 48.4 | 48.4 | 48.4 | 48.4 | 69.1 |
| Water (wt%) | 4 | 3 | 2 | 0 | 1.8 |
| Glycerin (wt%) | 1 | 2 | 3 | 5 | 1.2 |
| total | 100 | 100 | 100 | 100 | 100 |
| MgO/binder (wt/wt) | 4.4 | 4.4 | 4.4 | 4.4 | 4.5 |
| MgO/solid content* (wt/wt) | 79.8 | 78.2 | 76.6 | 73.6 | 78.4 |
| Solid content*/ edible ink composition (wt/wt) | 47.6 | 48.6 | 49.6 | 51.6 | 29.1 |

| | | | | | |
|---|---|---|---|---|---|
| * "Solid content" refers to the weight of the dry ink that is after drying of the edible ink composition. | | | | | |

Samples 16 to 20 were evaluated for Ink adhesion test (point 4 above), Ink color analysis (point 5 above), and test for long-term stability (point 3 above) in the same manner as described there. Table 7 shows the results.

The addition of glycerin or glycerin and water has no effect on long-term stability or whiteness, but the evaluation of adhesive strength is × up to 120 sec or 180 sec after printing. This means that after drying for 120 sec or 180 sec the ink remains wet. This indicates that the drying speed of the edible ink composition slowed down as was desired by the addition of glycerin and/or water.

**Table 7**

| | | Sample NO. of edible ink composition | | | | |
|---|---|---|---|---|---|---|
| | | 16 | 17 | 18 | 19 | 20 |
| adhesive strength | 10 | × | × | × | × | × |
| | 30 | × | × | × | × | × |
| | 60 | × | × | × | × | × |
| Time after print (sec) | 120 | × | × | × | × | × |
| | 180 | ○ | ○ | × | ○ | ○ |
| | 240 | ○ | ○ | ○ | ○ | ○ |
| | 600 | ○ | ○ | ○ | ○ | ○ |
| color analysis | L | 85.7 | 83.5 | 84.6 | 84.2 | 67.7 |
| | ΔL | 7.2 | 9.4 | 8.3 | 8.7 | 25.2 |
| long-time stability at room temperature | 2 weeks storage | No abnormality | No abnormality | No abnormality | No abnormality | No abnormality |

### 7. Moisture-proof edible ink composition

### Manufacturing method for moisture-proof edible ink composition

With the weight ratios of the ink composition given in Table 8, put ethanol in a container, add the stearic acid or the refined beeswax (these are called wax components), and heat the mixture to 50 °C to completely dissolve the wax components. Next, add the magnesium oxide and disperse it with a homogenizer at 8000 rpm for 1.5 minutes, then add the HPC little by little while stirring gently to completely dissolve. Disperse it with a homogenizer at 8000 rpm for another 5 minutes to make the ink composition.

**Table 8 Moisture-proof edible ink composition [wt. %]**

| | composition of the edible ink | | | | |
|---|---|---|---|---|---|
| Sample NO. | 21 | 22 | 23 | 24 | 25 |
| MgO | 22.4 | 22.4 | 22.4 | 22.4 | 22.4 |
| HPC | 5.2 | 5.2 | 5.2 | 5.2 | 5.2 |
| stearic acid | 0 | 0.5 | 1 | 2 | 0 |
| Refined Beeswax | 0 | 0 | 0 | 0 | 0.2 |
| 99%ethanol | 72.4 | 71.9 | 71.4 | 70.4 | 71.9 |
| total% | 100 | 100 | 100 | 100 | 100 |
| wax component content in wt % based on [MgO+HPC] | 0.0 | 1.8 | 3.6 | 7.2 | 0.7 |

The following products were used as components for the moisture-proof edible ink composition containing magnesium oxide.

| | |
|---|---|
| MgO (MS-2F) ; | Japan Natural Energy & Resources Co. Ltd. |
| HPC (Cerny) ; | Nippon Soda Co. Ltd. |
| stearic acid ; | NOF CORPORATION |
| Refined Beeswax ; | CERARICA NODA Co. Ltd. |

### 8. Whiteness and adhesion of moisture-proof edible ink composition

Two pieces of tape, about 50 µm thick, are placed parallel on the glass plate with a gap of 1 cm between them. Using the tapes on both sides as spacers, the ink prepared above is dropped onto the glass plate between the tapes, and a hard rubber squeegee is used in one go to spread the ink in the glass plate between the tapes. Due to the spacers the thickness of the band of ink spread between the spacers is about 50 µm and the solids content of the ink is about 27 %, so once the ink has dried and the tapes are peeled off, a band of dried ink with an estimated thickness of about 15 µm is obtained.

The L value of the color of this band of dried ink was measured with an X-Rite color meter, model Ci7600, on the same day as drying and was set as the initial value (T = 0 day). The glass plate with the band of dried ink on it was stored at 25 °C and 75 % RH, and the L value was measured on the 1st, 2nd, 5th, 7th, 12th, and 16th day. L value indicates whiteness/brightness. The difference (ΔL) between the L value after storage and the initial value is shown in Table 9.

**Table 9**

| | ΔL of dried ink | | | | |
|---|---|---|---|---|---|
| **sample NO.:** | **21** | **22** | **23** | **24** | **25** |
| **days elapsed** | | | | | |
| **0** | 0 | 0 | 0 | 0 | 0 |
| **1** | -1.53 | -0.45 | -0.23 | -0.29 | -0.11 |
| **2** | -4.8 | -0.6 | -0.46 | -0.34 | (*) |
| **5** | -9.6 | -0.88 | -0.46 | -0.49 | -0.39 |
| **7** | (**) | -1.23 | -0.64 | -0.59 | -0.48 |
| **12** | (**) | -1.4 | -0.64 | -0.6 | -0.52 |
| **16** | (**) | -1.56 | -0.64 | -0.62 | -0.57 |

| | | | | | |
|---|---|---|---|---|---|
| (*) L-value was not measured (**) The quality of the dried ink had by this time deteriorated so much that a meaningful measurement made no more sense. | | | | | |

### Results:

The decrease of the L value of the dried ink of the ink compositions comprising stearic acid or beeswax is significantly lower than the respective decrease of the L value of the dried ink without wax component (sample 21), so the whiteness of the dried ink without wax component is significantly lower than that of the dried ink with wax component after storage for some time under humid condition.

The dried ink of ink compositions containing magnesium oxide with stearic acid or beeswax also had better adhesion than the one without wax component.

In addition, the dried ink showed increased reflectance and whiteness (Table 10, L value at T=0).

**Table 10**

| Sample NO. | 21 | 22 | 23 | 24 |
|---|---|---|---|---|
| L value (T=0) | 75 | 80 | 84 | 85 |

### (INDUSTRIAL APPLICABILITY)

Since the edible ink composition of the present invention does not comprise titanium oxide, it is possible to print with high health safety and high added value, which is demanded by society.

In addition, since magnesium oxide has good whiteness and concealment power, it is possible to clearly print white and other colors.

The edible ink composition also has good adhesion to the surface of print substrate. Accordingly, the edible ink composition of the present invention is useful as a printing ink for the surfaces of solid food stuff and solid pharmaceutical formulations, especially capsules, tablets and caplets, in particular capsules.

### [SUMMARY]

[PROBLEM TO BE SOLVED] To provide an edible ink composition free from titanium oxide.

[SOLUTION TO PROBLEMS] An edible ink composition comprising magnesium oxide as a whitening agent, a binder, a solvent, and free from titanium oxide is produced. The edible ink composition of the present invention uses magnesium oxide instead of titanium oxide, as a whitening agent. Magnesium oxide has been safely used as a pharmaceutical agent and considered to have no health problems. Accordingly, it is useful for printing on the surface of solid foods, solid pharmaceutical preparations, in particular, capsules, tablets and caplet.

## Claims

1. An edible ink composition comprising magnesium oxide, a binder and a solvent,
wherein said magnesium oxide is produced at the calcining temperature of at least 700 °C, and the edible ink composition is free from titanium oxide.

2. The edible ink composition according to claim 1, wherein
said magnesium oxide is produced at the calcining temperature of at least 800 °C.

3. The edible ink composition according to claims 1 or 2, wherein magnesium oxide has a D90 value of 20 µm or less.

4. The edible ink composition according to any one of claims 1 to 3, wherein magnesium oxide has a particle size distribution with a D90 value of from 1 to 15 µm.

5. The edible ink composition according to any one of claims 1 to 4, wherein magnesium oxide has a particle size distribution with a D10 value of 0.1 µm or more.

6. The edible ink composition according to any one of claims 1 to 5, wherein the amount of magnesium oxide in the ink after drying of the edible ink composition is 99 wt% or less, preferably from 60 to 99 wt%, the wt% being based on the weight of the ink after drying of the edible ink composition.

7. The edible ink composition according to any one of claims 1 to 6, wherein the solid contents of the edible ink composition is 65 wt% or less, preferably from 20 to 65 wt%, of the weight of the edible ink composition.

8. The edible ink composition according to anyone of claims 1 to 7, wherein the solvent basically volatilizes or evaporates and does not remain in the ink after the edible ink composition has dried.

9. The edible ink composition according to anyone of claims 1 to 8, wherein the solvent is an alcohol or a mixture of alcohol with water, preferably the alcohol is ethanol, propanol or butanol, more preferably ethanol or butanol; even more preferably the alcohol is ethanol.

10. The edible ink composition according to anyone of claims 1 to 9,
wherein the binder is preferably an edible film-forming and non-thermosetting polymer or shellac and the binder is soluble in alcohol, and when the binder is a non-thermosetting polymer, the binder is hydroxypropyl cellulose, polyvinylpyrrolidone or mixtures thereof.

11. The edible ink composition according to any one of claims 1 to 10, comprising a moisture-proof coating agent.

12. The edible ink composition according to claim 11, wherein the moisture-proof coating agent is a higher fatty acid ester soluble or miscible in alcohol but insoluble in water, a C₁₆ or higher alcohol, a C₁₂ or higher fatty acid, a glyceride, or a mixture thereof or a surfactant with an HLB value of 6 or less.

13. The edible ink composition according to claim 11 or 12,
wherein the moisture-proof coating agent is stearic acid, beeswax, such as white beeswax, resin, such as rosin, wood wax, spermaceti, lanolin, lanolin alcohol, cetanol, stearyl alcohol, cetanol monostearate polyethylene glycol mixed wax, cetanol polysorbate 60 mixed wax, cetostearyl alcohol, isopropyl myristate, isopropyl linoleate, isopropyl palmitate, vegetable oil such as oleic acid, olive oil, castor oil.

14. The edible ink composition according to any one of claims 11 to 13, wherein
the amount of the moisture-proof coating agent is 0.1 to 20 %, preferably 0.1 to 10 %, based on the combined weight of the magnesium oxide and the binder.

15. The edible ink composition according to any one of claims 1 to 14, comprising a further colorant having a color other than white.

16. The edible ink composition according to anyone of claims 1 to 15, comprising one or more additives commonly used in printing inks such as drying speed modifier, plasticizers, wetting agents, adhesion enhancers, ink glossing agents, a thixotropy imparting agent and fragrance;
possible additives comprise glycerin, triethyl citrate (TEC), triacetin, ethylene glycol, propylene glycol, resins, waxes, polyglycerin fatty acid ester, glycerin fatty acid ester, sucrose fatty acid ester, sorbitan fatty acid ester, lecithin, enzymatically degraded lecithin, polysorbate, silicon dioxide (SiO2), a starch, an alcohol-insoluble cellulose, flavors and/or a combination thereof.

17. A print substrate printed with the edible ink composition according to any one of claims 1 to 16; preferably the print substrate is a solid food stuff or a solid pharmaceutical formulation, solid pharmaceutical formulation is preferably a hard capsule, a soft capsule, a tablet or a caplet.

18. A method for producing an edible ink composition, the method comprising the step of mixing the components of the edible ink composition which are magnesium oxide, binder, solvent and any optional component such as an additive to provide the edible ink composition according to any one of claims 1 to 16.

19. A method of printing the edible ink composition on a print substrate, with the edible ink composition according to any one of claims 1 to 16 and the print substrate.
